# EUROPÄISCHE PATENTSCHRIFT

(11) **EP 3 356 077 B1**
(45) Veröffentlichungstag und Bekanntmachung des Hinweises auf die Patenterteilung: **09.09.2020**
(21) Anmeldenummer: 15775163.7
(22) Anmeldetag: 30.09.2015
(51) Int. Cl.: B23K 20/04, B23K 20/227, B32B 15/01, C22C 38/00, C22C 38/02, C22C 38/04, C22C 38/18, C22C 38/38, C22C 1/02, B23K 101/00, B23K 101/18, B23K 103/04, B23K 103/16, B23K 103/18

(54) **VERWENDUNG EINES STAHLWERKSTÜCKS MIT VERBESSERTER OBERFLÄCHENQUALITÄT**
USE OF A STEEL WORKPIECE WITH IMPROVED SURFACE QUALITY
UTILISATION D'UNE PIÈCE EN ACIER POSSÉDANT UNE QUALITÉ DE SURFACE AMÉLIORÉE

(43) Veröffentlichungstag der Anmeldung: 08.08.2018
(73) Patentinhaber: ThyssenKrupp Steel Europe AG, 47166 Duisburg (DE); thyssenkrupp AG, 45143 Essen (DE)
(72) Erfinder: SIKORA, Sascha, 44534 Lünen (DE); BECKER, Jens-Ulrik, 47058 Duisburg (DE); MYSLOWICKI, Stefan, 41238 Mönchengladbach (DE); DINTER, Melanie, 45657 Recklinghausen (DE); PIERONEK, David, 44329 Dortmund (DE); BEIER, Thorsten, 59423 Unna (DE)
(74) Vertreter: ThyssenKrupp Steel Europe AG
(86) Internationale Anmeldenummer: PCT/EP2015/072598
(87) Internationale Veröffentlichungsnummer: WO 2017/054862

(56) Entgegenhaltungen:
- EP-A1- 2 886 332
- WO-A1-2012/048844
- DE-A1-102008 022 709
- DE-A1-102013 017 798

## Beschreibung

Die Erfindung betrifft die Verwendung eines Stahlwerkstücks zur Herstellung eines Fahrwerksteils, insbesondere Rad, Radträger, Radlager, Radaufhängung, Träger, Achse, Lenker oder Teil hiervon.

In der Automobilindustrie wird stetig nach neuen Ansätzen und Lösungen zur Reduzierung des Kraftstoffverbrauchs bzw. zur Erhöhung der Reichweite gesucht. Der Leichtbau wurde dabei als ein wesentlicher Baustein zur Reduzierung des Fahrzeuggewichts und damit zur Reduzierung des Kraftstoffverbrauchs und zur Erhöhung der Reichweite identifiziert. Materialeinsparung können unter anderem durch den Einsatz von Werkstoffen mit gesteigerter Festigkeit erzielt werden.

Der Leichtbau ist gerade für Fahrwerksteile, die Teil der ungefederten Masse sind, besonders wichtig. Diese Komponenten unterliegen im Betrieb allerdings stark schwingenden Wechselbeanspruchungen, wodurch es gleichzeitig wünschenswert ist, dass die Komponenten eine hohe Dauerfestigkeit aufweisen.

Ein möglicher Ansatz unterschiedliche Eigenschaften in einem Bauteil zu vereinigen ist die Verwendung von Werkstoffverbunden. Aus dem Stand der Technik, beispielsweise der DE 10 2008 022 709 A1, ist beispielsweise die Verwendung eines mehrlagigen mittels Walzplattieren hergestellten Werkstoffverbunds mit drei Lagen bekannt. Um die Anforderungen, wie sie im Fahrwerksbereich benötigt werden, insbesondere an eine hohe Betriebsfestigkeit, zu erfüllen, wird vorgeschlagen, die äußeren Schichten aus einer umformbaren Stahllegierung FB-W 600 und die mittlere Lage aus einem FeMn-Stahl vorzusehen, wobei die äußeren Schichten jeweils 30% der Gesamtdicke betragen sollen. Des Weiteren ist aus der EP 2 886 332 A1 bekannt, einen dreilagigen Stahlwerkstoffverbund zu verwenden, mit welchem durch Warmumformen und Abschrecken ein Karosseriebauteil herstellbar ist.

Problematisch ist allerdings, dass ausgehend von einem mikrolegierten Stahl, der im Fahrwerksbereich breite Anwendung findet, eine Steigerung der Festigkeit dazu führen kann, dass die Verarbeitung des Stahls negativ beeinflusst wird. Beispielsweise kann das Zunderverhalten des Materials so verändert sein, dass beim Warmwalzen eine unvorteilhafte Beeinflussung der Oberflächengüte, etwa durch Zundernarben, der Warmbänder resultieren kann.

Untersuchungen haben gezeigt, dass hohe Festigkeit und Qualität gerade an der Oberfläche des Materials jedoch besonders relevant sind. Insbesondere bei Anwendungen, bei denen unter Einsatzbedingungen schwingende Belastungen auftreten, können Fehler in der Materialoberfläche zu einem vorzeitigen Versagen führen. Aus diesem Grund werden bei solchen Bauteilen sehr hohe Ansprüche an die Oberflächenqualität des verwendeten Materials gestellt.

Vor diesem Hintergrund ist es Aufgabe der vorliegenden Erfindung, eine Verwendung anzugeben, wobei eine möglichst hohe oberflächennahe Festigkeit und dennoch günstige Oberflächeneigenschaften, insbesondere ein günstiges Zunderverhalten während des Warmwalzens, erreicht werden.

Die eingangs genannte Aufgabe wird durch eine Verwendung ein Stahlwerkstück zur Herstellung eines Fahrwerksteils, insbesondere eines Rads, eines Radträgers, eines Radlagers, einer Radaufhängung, eines Trägers, einer Achse (jeglicher Art), eines Lenkers oder eines Teils hiervon gelöst, wobei das Stahlwerkstück in dem Randbereich weicher ausgebildet ist als in dem Kernbereich und die Summe der Legierungsbestandteile C, Si, Mn, Cr und N des Stahlwerkstücks insgesamt größer als 1,45 Gew.-% ist.

Die Legierungsbestandteile C, Si, Mn, Cr, und N haben einen festigkeitssteigernden Einfluss auf die Stahllegierung. Es hat sich jedoch gezeigt, dass wenn diese Gruppe von Legierungsbestandteilen insgesamt mit einem Wert von mehr als 1,45 Gew.-% vorgesehen wird, die notwendige oberflächennahe Festigkeit im Kernbereich erreicht werden kann, aber trotzdem noch ein ausreichend weicher Randbereich vorgesehen werden kann, um eine verbesserte Oberflächenqualität des Stahlwerkstücks zu erzielen. Unter der Summe der Legierungsbestandteile des Stahlwerkstücks insgesamt ist zu verstehen, dass die Konzentration im gesamten Stahlwerkstück einschließlich des Kernbereichs und des Randbereichs global oder makroskopisch gemittelt betrachtet wird. Lokal oder mikroskopisch gesehen kann also insbesondere im Randbereich eine Konzentration niedriger als 1,45 Gew.-% dieser festigkeitssteigernden Legierungsbestandteile vorgesehen sein und im Kernbereich eine Konzentration höher als 1,45 Gew.-%. Insgesamt oder global gesehen ist die Konzentration jedoch höher als 1,45 Gew.-%.

Durch die Aufteilung des Stahlwerkstoffs in einen härteren Kernbereich und einen im Vergleich dazu weicheren Randbereich in Kombination mit einer vergleichsweise hohen Mindestkonzentration der Legierungsbestandteile C, Si, Mn, Cr, und N kann somit eine zu geringe Dauerfestigkeit des Werkstücks bzw. des daraus hergestellten Bauteils vermieden werden, während jedoch trotzdem noch vorteilhafte Oberflächeneigenschaften bezüglich des Zunderverhaltens während des Warmwalzens gewährleistet werden können.

Der Randbereich kann dabei insbesondere derart vorgesehen sein, dass die Eigenschaften eines aus dem Stahlwerkstück hergestellten Bauteils im Wesentlichen durch den Kernbereich bestimmt werden. Im Gegensatz zu den Ansätzen aus dem Stand der Technik hat sich gezeigt, dass der Randbereich nicht im Sinne einer funktionalen Schicht vorgesehen zu sein braucht, welche die Eigenschaften des späteren Bauteils maßgeblich beeinflussen muss. Vielmehr kann der Randbereich so ausgestaltet sein, dass dessen Eigenschaften zwar bei der Fertigung (etwa dem Warmwalzen) vorteilhaft sind, aber später in dem aus dem Stahlwerkstück hergestellten Bauteil im Wesentlichen keine Rolle mehr spielt. Dies kann beispielsweise durch die Geometrie, insbesondere eine geringe Dicke des Randbereichs erreicht werden, sodass die Eigenschaften des späteren Bauteils im Wesentlichen durch den Kernbereich bestimmt werden.

Dass das Stahlwerkstück in dem Randbereich weicher ausgebildet ist als in dem Kernbereich, heißt insbesondere, dass das Stahlwerkstück im Randbereich eine höhere Bruchdehnung, eine geringere Zugfestigkeit und/oder eine geringere Dehngrenze aufweist als im Kernbereich.

Der Randbereich kann insbesondere als Oberflächenbereich des Stahlwerkstücks angesehen werden. Der Randbereich bildet somit eine weiche Auflage des Stahlwerkstücks.

Das Stahlwerkstück kann insbesondere ein Halbzeug, ein Rohling, ein Stahlflachprodukt, beispielsweise ein Stahlblech oder ein Stahlband, oder auch ein Bauteil sein.

Grundsätzlich ist denkbar, dass das Stahlwerkstück weiterhin einseitig oder beidseitig eine organische oder anorganische Beschichtung aufweist, welche zusätzlich auf den weichen Randbereich aufgebracht wird.

Als besonders vorteilhaft ist gemäß einer Ausgestaltung des erfindungsgemäßen Stahlwerkstücks die Summe der Legierungsbestandteile C, Si, Mn, Cr und N des Stahlwerkstücks insgesamt insbesondere geringer als 4,5 Gew.-%, vorzugsweise geringer als 4,0 Gew.-%, besonders bevorzugt geringer als 3,5 Gew.-%. Zwar kann durch eine Erhöhung der festigkeitssteigernden Legierungsbestandteile eine für die Dauerfestigkeit vorteilhafte Erhöhung der Festigkeit erreicht werden. Allerdings wird durch eine Begrenzung der festigkeitssteigernden Legierungsbestandteile des Stahlwerkstücks auf besonders bevorzugt weniger als 3,5 Gew.-% eine zu hohe Festigkeit im Randbereich und damit eine Verschlechterung der Oberflächengüte etwa durch Zundernaben während der Fertigung vermieden.

Besonders vorteilhaft in Bezug auf eine hohe Festigkeit einerseits und eine gleichzeitig hohe Oberflächenqualität hat sich herausgestellt, wenn erfindungsgemäß mehrere der folgenden Legierungsbestandteile in Gew.-% des Stahlwerkstücks insgesamt wie folgt beschränkt sind:

| | | | |
|---|---|---|---|
| 0,05 | ≤ | C | ≤0,5; |
| 0,060 | ≤ | Si | ≤1,5; |
| 0,5 | ≤ | Mn | ≤3,0; |
| | | P | ≤0,03; |
| | | S | ≤0,03; |
| | | Al | ≤2,0; |
| | | Cr | ≤1,5; |
| | | Cu | ≤0,5; |
| | | Mo | ≤0,5; |
| | | N | ≤0,01; |
| | | Ni | ≤0,5; |
| | | Nb | ≤0,2; |
| | | Ti | ≤0,5; |
| | | V | ≤0,1; |
| | | B | ≤0,1; |
| | | As | ≤0,01; |
| | | Sn | ≤0,05; |
| | | Co | ≤0,02; |
| | | Ca | ≤0,01. |

Wie bereits zuvor ausgeführt, kann das Stahlwerkstück lokal in unterschiedlichen Bereichen höhere oder niedrigere Konzentrationen aufweisen. Maßgeblich ist, dass die jeweilige Bedingung in Bezug auf das Stahlwerkstück insgesamt erfüllt ist.

Gemäß einer weiteren bevorzugten Ausgestaltung der Erfindung ist die Summe der Legierungsbestandteile C, Si, Mn, Cr und N im Randbereich insbesondere größer als 0,01 Gew.-%, vorzugsweise größer als 0,05 Gew.-%, besonders bevorzugt größer als 0,1 Gew.-% und/oder geringer als 1,35 Gew.-%. Durch eine Mindestmenge der Summe der festigkeitssteigernden Legierungsbestandteile im Randbereich wird eine zu starke Verminderung der Festigkeit des gesamten Stahlwerkstücks vermieden, während durch eine Begrenzung des Maximalgehalts der festigkeitssteigernden Legierungsbestandteile in Summe eine zu hohe Festigkeit im Randbereich vermieden wird, sodass eine ausreichend weiche Auflage während der Fertigung bereitgestellt werden kann. Gemäß einer weiteren bevorzugten Ausgestaltung der Erfindung ist die Summe der Legierungsbestandteile C, Si, Mn, Cr und N im Kernbereich größer als 1,7 Gew.-% und/oder insbesondere geringer als 4,8 Gew.-%, vorzugsweise geringer als 4,3 Gew.-%, besonders bevorzugt geringer als 3,8 Gew.-%. Durch eine Mindestmenge der Summe der festigkeitssteigernden Legierungsbestandteile im Kernbereich kann eine ausreichend hohe Festigkeit des Stahlwerkstücks insgesamt erreicht werden, sodass sich dieses insbesondere für wechselbeanspruchte Bauteile eignet. Gleichzeitig kann durch eine Begrenzung der Summe der festigkeitssteigernden Legierungsbestandteile im Kernbereich vermieden werden, dass die positiven Eigenschaften des weichen Randbereichs durch eine zu hohe oberflächennahe Festigkeit beeinträchtigt werden. Erfindungsgemäß ist der Randbereich des Stahlwerkstücks aus zwei beidseitig des Kernbereichs vorgesehenen Randschichten gebildet. Durch ein beidseitiges Vorsehen des weicher ausgebildeten Randbereichs kann eine besonders hohe Dauerfestigkeit von aus dem Stahlwerkstück hergestellten Bauteilen erreicht werden, welche insbesondere bei Fahrwerksteilen benötigt wird, da bei der Fertigung durch die beidseitig weiche Auflage beidseitig eine hohe Oberflächenqualität eingestellt werden kann. Grundsätzlich ist denkbar, dass die beidseitig vorgesehenen Randschichten unterschiedlich ausgebildet werden. Gemäß einer weiteren Ausgestaltung der Erfindung ist es jedoch vorteilhaft, wenn die beidseitig des Kernbereichs vorgesehenen Randschichten hinsichtlich ihrer Dicke und/oder ihrer Zusammensetzung im Wesentlichen gleich aufgebaut sind. Ein symmetrischer Aufbau des Stahlwerkstücks führt zum einen zu homogeneren Eigenschaften des Stahlwerkstücks und zum anderen zu einem einfacheren Herstellungsprozess. Die beidseitig des Kernbereichs vorgesehenen Randschichten weisen jeweils eine Dicke von weniger als 10%, bevorzugt weniger als 5% der Gesamtdicke des Stahlwerkstücks auf. Bisher war man davon ausgegangen, dass man vergleichsweise dicke und weiche Oberflächenschichten vorsehen musste, um die Oberflächeneigenschaften etwa beim Warmwalzen ausreichend zu schützen. Es hat sich allerdings gezeigt, dass bereits bei vergleichsweise dünnen Randschichten prozesssicher erreicht werden kann, dass durch Vermeidung von Zundernarben eine qualitativ hochwertige Bandoberfläche realisiert werden kann. Dies hat zudem den Vorteil, dass gleichzeitig eine hohe oberflächennahe Festigkeit erzielt werden kann.

Erfindungsgemäß beträgt die Dicke der Randschichten jeweils zwischen 3% und 5% oder zwischen 6% und 8% der Gesamtdicke des Stahlwerkstücks. Bei Dicken zwischen 3% und 5%, insbesondere etwa 4% kann eine besonders oberflächennahe Festigkeit erreicht werden. Bei Dicken zwischen 6% und 8%, insbesondere etwa 7% ist der Randbereich entsprechend breiter ausgebildet, sodass eventuell höhere Walzgrade und/oder höhere Temperaturen bei der Fertigung verwendet werden können.

Gemäß einer weiteren bevorzugten Ausgestaltung der Erfindung ist die Zugfestigkeit Rₘ des Stahlwerkstücks insgesamt größer als 700 MPa, bevorzugt größer als 800 MPa, weiter bevorzugt größer als 900 MPa, besonders bevorzugt größer als 1000 MPa. Es hat sich gezeigt, dass durch die beschriebenen Stahlwerkstücke problemlos vergleichsweise hohe Zugfestigkeiten erreicht werden können, ohne das Zunderverhalten negativ zu beeinträchtigen.

Um eine besonders hohe Zugfestigkeit des Stahlwerkstücks insgesamt zu erhalten, ist die Zugfestigkeit Rₘ im Kernbereich des Stahlwerkstücks größer als 700 MPa, bevorzugt größer als 900 MPa, besonders bevorzugt größer als 1000 MPa. Dadurch kann der Oberflächenbereich entsprechend weich ausgeführt werden und trotzdem eine hohe Zugfestigkeit erreicht werden.

Bevorzugt ist die Zugfestigkeit Rₘ im Randbereich des Stahlwerkstücks geringer als 500 MPa, bevorzugt geringer als 400 MPa. Bei einer entsprechend geringen Zugfestigkeit können Zundernarben des Stahlwerkstücks beim Warmwalzen besonders effektiv vermieden werden, sodass eine hohe Oberflächenqualität erreicht wird.

Gemäß einer weiteren bevorzugten Ausgestaltung der Erfindung ist die Dehngrenze R_{p0,2} des Stahlwerkstücks insgesamt größer als 650 MPa, bevorzugt größer als 700 MPa, besonders bevorzugt größer als 800 MPa. Durch ein Stahlwerkstück mit einer vergleichsweise hohen Dehngrenze kann die Dauerfestigkeit eines hieraus hergestellten Bauteils weiter verbessert werden.

Um eine hohe Dehngrenze des Stahlwerkstücks insgesamt zu erhalten, ist es besonders bevorzugt, wenn die Dehngrenze R_{p0,2} im Kernbereichs des Stahlwerkstücks größer als 700 MPa, bevorzugt größer als 800 MPa, besonders bevorzugt größer als 1000 MPa ist.

Hingegen ist es bevorzugt, wenn die die Dehngrenze R_{p0,2} im Randbereich des Stahlwerkstücks geringer als 400 MPa, bevorzugt geringer als 300 MPa ist, um ein möglichst positives Zunderverhalten während der Fertigung zu erzielen.

Beträgt die Bruchdehnung A₈₀ gemäß einer weiteren Ausgestaltung der Erfindung im Randbereich mindestens 15%, bevorzugt mindestens 30%, kann eine besonders weiche Auflage bereitgestellt werden, welche ein besonders vorteilhaftes Zunderverhalten des Stahlwerkstücks ermöglicht.

Hingegen ist die Bruchdehnung A₈₀ des Kernbereichs und/oder des Stahlwerkstücks insgesamt bevorzugt jedoch deutlich geringer, da diese durch den härteren Kernbereich bestimmt wird. Beispielsweise beträgt die Bruchdehnung A₈₀ des Kernbereichs und/oder des Stahlwerkstücks insgesamt zwischen 3,0% und 10%.

Gemäß einer weiteren Ausgestaltung der Erfindung ist das Stahlwerkstück eine Verbundstruktur und der Kernbereich und der Randbereich werden durch Verbundschichten der Verbundstruktur gebildet, wobei die Verbundstruktur insbesondere durch Walzplattieren hergestellt ist. Durch eine Verbundstruktur können der Kernbereich und der Randbereich auf besonders einfache Weise bei einem Stahlwerkstück realisiert werden. Die Legierungsbestandteile der einzelnen Schichten können dabei präzise eingestellt werden. Die einzelnen Schichten der Verbundstruktur können durch stoffschlüssiges Fügen, insbesondere thermisches Fügen miteinander verbunden werden. Die Verbundstruktur wird dabei, insbesondere durch Plattieren, bevorzugt durch Walzplattieren, besonders bevorzugt Warmwalzplattieren hergestellt. Denkbar ist auch, alternativ die einzelnen Schichten in einem Gießprozess herzustellen.

Gemäß einer weiteren Ausgestaltung wird der Kernbereich durch einen höherfesten oder höchstfesten Stahlwerkstoff gebildet, insbesondere durch einen Complexphasenstahl, einen Dualphasenstahl, einen Martensitphasenstahl, einen Manganborstahl oder einen Mehrphasenstahl. Diese Stahlwerkstoffe können hohe Festigkeiten aufweisen und dem aus dem Stahlwerkstück hergestellten Bauteil eine hohe Dauerfestigkeit verleihen. Ein Mehrphasenstahl kann insbesondere ein TPN-Stahl (Dreiphasenstahl mit Nanoausscheidungen) sein.

Besonders vorteilhaft in Bezug auf eine hohe Festigkeit hat sich herausgestellt, wenn mehrere der folgenden Legierungsbestandteile in Gew.-% im Kernbereich wie folgt beschränkt sind:

| | | | |
|---|---|---|---|
| 0,060 | ≤ | C | ≤ 0,45; |
| 0,050 | ≤ | Si | ≤ 1,50; |
| 1,0 | ≤ | Mn | ≤ 3,0; |
| | | P | ≤ 0,020; |
| | | S | ≤ 0,003; |
| | | Al | ≤ 1,350; |
| | | Cr | ≤ 0,9; |
| | | Cu | ≤ 0,20; |
| | | Mo | ≤ 0,3; |
| | | N | ≤ 0,01; |
| | | Ni | ≤ 0,100; |
| | | Nb | ≤ 0,2; |
| | | Ti | ≤ 0,2; |
| | | V | ≤ 0,050; |
| | | B | ≤0,01; |
| As | | | ≤ 0,030; |
| Sn | | | ≤ 0,030; |
| Co | | | ≤ 0,010; |
| Ca | | | ≤ 0,005. |

Gemäß einer weiteren Ausgestaltung wird der Randbereich durch einen Tiefziehstahl oder einen mikrolegierten, höherfesten Stahl gebildet. Diese Stahlwerkstoffe können ausreichend weich vorgesehen werden, wodurch die Ausbildung von Zundernarben effektiv minimiert oder unterbunden werden kann.

Besonders vorteilhaft in Bezug auf ein Vermeiden von Zundernarben bei der Fertigung hat sich herausgestellt, wenn ein oder mehrere der folgenden Legierungsbestandteile in Gew.-% im Randbereich wie folgt beschränkt sind:

| | |
|---|---|
| C | ≤ 0,1; |
| Si | ≤ 0,5; |
| Mn | ≤ 1,0; |
| P | ≤ 0,03; |
| S | ≤ 0,02; |
| Al | ≤ 0,1; |
| Cr | ≤ 0,3; |
| Cu | ≤ 0,3; |
| Mo | ≤ 0,1; |
| N | ≤ 0,01; |
| Ni | ≤ 0,200; |
| Nb | ≤ 0,2; |
| Ti | ≤ 0,2; |
| B | ≤ 0,001; |
| Sn | ≤ 0,040. |

Gemäß einer weiteren Ausgestaltung der Erfindung sind der Kernbereich und der Randbereich Bereiche eines monolithischen Werkstücks, wobei der Randbereich insbesondere durch einen Glühvorgang ausgebildet wird. Alternativ zur Ausbildung des Kernbereichs und des Randbereichs durch Fügen separater Werkstücke oder Gießen kann das Stahlwerkstück somit auch als monolithisches Stahlwerkstück hergestellt werden und die Eigenschaften des Kernbereichs und/oder des Randbereichs (etwa durch einen sich anschließenden Glühvorgang) eingestellt werden. Ein derartiger Glühvorgang kann beispielsweise ein Randentkohlen und/oder ein Diffusionsglühen sein. Durch ein derartiges Stahlwerkstück kann insbesondere die Gefahr eines Delaminierens einzelner Schichten reduziert werden.

Fahrwerksteile, insbesondere die Fahrwerksteile der ungefederten Masse, unterliegen im Einsatz einer besonders hohen Wechselbeanspruchung. Durch die Erfindung können Fahrwerksteile mit einer besonders hohen Dauerfestigkeit und Oberflächenqualität bereitgestellt werden, sodass die im Betrieb stark schwingenden Wechselbeanspruchungen durch die Fahrwerksteile besonders gut ertragen werden können.

In Bezug auf weitere vorteilhafte Ausgestaltungen wird auf die Vorteile und Ausführungen zu den Ausgestaltungen der Erfindung verwiesen.

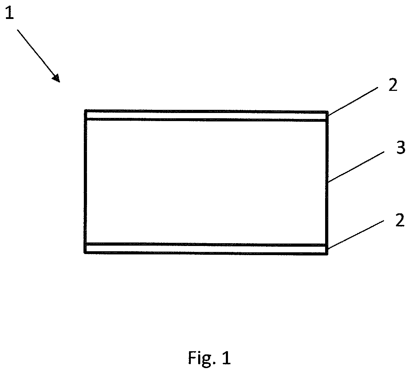

Im Weiteren soll die Erfindung anhand von Ausführungsbeispielen in Verbindung mit der Zeichnung näher erläutert werden. Die Zeichnung zeigt in
- Fig. 1: ein Ausführungsbeispiel eines Stahlwerkstücks in Form einer Verbundstruktur.

Die Figur 1 zeigt beispielhaft ein Ausführungsbeispiel eines Stahlwerkstücks in Form einer Verbundstruktur 1. Die Verbundstruktur 1 weist einen Randbereich, welcher aus zwei äußeren Randschichten 2 gebildet ist, und einen Kernbereich, welcher als Kernschicht 3 ausgebildet ist, auf. Die Randschichten 2 weisen jeweils eine Dicke von weniger als 10% der Gesamtdicke der Verbundstruktur 1 auf.

In Zusammenhang mit den Tabellen 1 bis 5 am Ende der Beschreibung werden im Folgenden beispielhaft Stahllegierungszusammensetzungen mit Legierungsbestandteilen in Gew.-% und deren mechanische Eigenschaften für die Kernschicht 3 und den Randschichten 2 bzw. die gesamte Verbundstruktur 1 angegeben.

Tabelle 1a zeigt drei Legierungszusammensetzungen A1, A2, A3, A4, welche für die Randschichten 2 verwendet werden können. Legierungen A1 und A2 sind jeweils Tiefziehstähle, während Legierung A3 und A4 höherfestere Stähle sind. Die Tabelle gibt die jeweiligen minimalen und maximalen festigkeitssteigernden Legierungsbestandteile für jede der Legierungen A1 bis A4 an. Optional enthalten die Legierungen A1 bis A4 ein oder mehrere der wie folgt begrenzten Legierungsbestandteile in Gew.-%:

| | |
|---|---|
| P | ≤0,03; |
| S | ≤0,03; |
| Al | ≤0,2; |
| Cr | ≤0,3; |
| Cu | ≤0,3; |
| Mo | ≤0,1; |
| N | ≤0,01; |
| Ni | ≤0,5; |
| Nb | ≤0,1; |
| Ti | ≤0,2; |
| B | ≤0,01; |
| Sn | ≤0,02; |
| Ca | ≤0,01. |

Tabelle 1b zeigt die Summe der Legierungsbestandteile C, Si, Mn, Cr und N jeweils für die Legierungen A1 bis A4. Die Summe der Legierungsbestandteile C, Si, Mn, Cr und N liegt für die Legierungen A1 bis A4 jeweils unterhalb von 1,45 Gew.-%. Die Legierungen A1 bis A4 weisen vergleichsweise geringe Zugfestigkeiten und Dehngrenzen, jedoch vergleichsweise hohe (Mindest-)Bruchdehnungen auf.

Tabelle 2a zeigt nun sieben Legierungszusammensetzungen K1, K2, K3, K4, K5, K6, K7, welche für die Kernschicht 3 verwendet werden können. Legierung K1 ist ein Dreiphasenstahl mit Nanoausscheidungen, Legierungen K2 bis K4 sind Komplexphasenstähle bzw. Dualphasenstähle, Legierung K5 ist ein Martensitphasenstahl, Legierung K6 ein Manganborstahl und Legierung K7 ein Mehrphasenstahl. Die Tabelle gibt wiederum die jeweiligen minimalen und maximalen festigkeitssteigernden Legierungsbestandteile für jede der Legierungen K1 bis K7 an. Optional enthalten die Legierungen K1 bis K7 ein oder mehrere der wie folgt begrenzten Legierungsbestandteile in Gew.-%:

| | |
|---|---|
| P | ≤0,03; |
| S | ≤0,01; |
| Al | ≤1,5; |
| Cr | ≤1,0; |
| Cu | ≤0,2; |
| Mo | ≤0,3; |
| N | ≤0,01; |
| Ni | ≤0,3; |
| Nb | ≤0,1; |
| Ti | ≤0,2; |
| V | ≤0,1; |
| B | ≤0,01; |
| As | ≤0,02; |
| Sn | ≤0,05; |
| Co | ≤0,03; |
| Ca | ≤0,01. |

Tabelle 2b zeigt die Summe der Legierungsbestandteile C, Si, Mn, Cr und N jeweils für die Legierungen K1 bis K7. Die Summe der Legierungsbestandteile C, Si, Mn, Cr und N liegt für die Legierungen K1 bis K7 jeweils oberhalb von 1,45 Gew.-%. Die Legierungen K1 bis K7 weisen vergleichsweise hohe Zugfestigkeiten und Dehngrenzen, jedoch vergleichsweise geringe (Mindest-)Bruchdehnungen auf.

Die Tabellen 3 bis 5 zeigen nun unterschiedliche mit V1 bis V15 bezeichnete Ausführungsbeispiele verschiedener Verbundstrukturen 1. Dabei ist unter der Spalte Aufbau jeweils angegeben, welche der Legierungen K1 bis K7 für die Kernschicht 3 und welche der Legierungen A1 bis A4 für die Randschichten 2 verwendet wurde. Zudem ist angegeben, welchen prozentualen Anteil eine Schicht an der Gesamtdicke der Verbundstruktur 1 hat. In den angegebenen Beispielen V1 bis V15 beträgt die prozentuale Dicke der Randschichten 2 entweder jeweils 4% (V1, V3) oder 7% (V2, V4 bis V15) der Gesamtdicke der Verbundstruktur 1. Es wurde also jeweils ein symmetrischer Schichtaufbau gewählt. Die Verbundstruktur 1 wurde in diesem Fall beispielsweise durch Warmwalzplattieren der einzelnen Schichten 2, 3 hergestellt.

Weiterhin ist die Summe der Legierungsbestandteile C, Si, Mn, Cr und N für die Verbundstruktur 1 insgesamt angegeben. Schließlich sind, soweit verfügbar, die mechanischen Werte der jeweiligen Verbundstruktur 1 der Ausführungsbeispiele V1 bis V15 angegeben, insbesondere die Zugfestigkeit, die Dehngrenze und die (Mindest-) Bruchdehnung.

Wie zu erkennen ist, ist die Summe der Legierungsbestandteile C, Si, Mn, Cr und N der Verbundstruktur 1 insgesamt jeweils größer als 1,45 Gew.-%. Es hat sich gezeigt, dass unter Einhaltung dieser Bedingung, die Verbundstruktur 1 gemäß der Beispiele V1 bis V15 insgesamt jeweils hohe Werte für die Zugfestigkeit und Dehngrenze erreichen können, während durch die Randschichten 2, welche jeweils durch eine der Legierungen A1 bis A4 gebildet werden, eine weiche Auflage bereitgestellt wird. Dies ermöglicht eine Fertigung unter Vermeidung von Zundernaben, wobei jedoch gleichzeitig eine hohe oberflächennahe Festigkeit erzielt wird. Im Ergebnis kann so eine Verbundstruktur 1 bereitgestellt werden, mit der Bauteile mit einer hohen Dauerfestigkeit insbesondere bei stark schwingenden Wechselbeanspruchungen bereitgestellt werden können.

Die vorherigen Ausführungen in Bezug auf ein Stahlwerkstück in Form einer Verbundstruktur 1 gelten ebenso für Stahlwerkstücke, welche beispielsweise monolithisch ausgebildet sind. In diesem Fall können die über die Dicke des Stahlwerkstücks variierenden Legierungszusammensetzungen beispielsweise durch eine nachträgliche Wärmebehandlung eingestellt werden.

**Tabelle 1a**

| | | **C** | **Si** | **Mn** | **Cr** | **N** |
|---|---|---|---|---|---|---|
| **A1** | min. | 0,020 | | 0,16 | | 0,003 |
| | max. | 0,055 | 0,04 | 0,30 | 0,06 | 0,006 |
| **A2** | min. | | | 0,11 | | |
| | max. | 0,003 | 0,02 | 0,17 | 0,05 | 0,004 |
| **A3** | min. | 0,060 | 0,17 | 0,75 | | |
| | max. | 0,080 | 0,24 | 0,85 | 0,15 | 0,006 |
| **A4** | min. | 0,027 | 0,057 | 0,34 | | 0,001 |
| | max. | 0,046 | 0,10 | 0,44 | 0,09 | 0,005 |

**Tabelle 1b**

| | | **C + Si + Mn + Cr + N** | **Rₘ** | **R_{p0,2}** | **A₈₀** |
|---|---|---|---|---|---|
| **A1** | min. | 0,18 | 370 MPa | 280 MPa | > 30,0% |
| | max. | 0,46 | | | |
| **A2** | min. | 0,11 | 370 MPa | 280 MPa | > 33,0% |
| | max. | 0,25 | | | |
| **A3** | min. | 0,98 | 410 MPa | 340 MPa | >15,0% |
| | max. | 1,33 | | | |
| **A4** | min. | 0,43 | 383 MPa | 300 MPa | > 26,0 % |
| | max. | 0,68 | | | |

**Tabelle 2a**

| | | **C** | **Si** | **Mn** | **Cr** | **N** |
|---|---|---|---|---|---|---|
| **K1** | min. | 0,155 | 0,25 | 1,45 | | |
| | max. | 0,170 | 0,30 | 1,60 | 0,10 | 0,005 |
| **K2** | min. | 0,060 | 0,57 | 1,77 | 0,32 | |
| | max. | 0,070 | 0,67 | 1,92 | 0,42 | 0,006 |
| **K3** | min. | 0,065 | 0,25 | 2,50 | 0,65 | |
| | max. | 0,080 | 0,30 | 2,65 | 0,75 | 0,006 |
| **K4** | min. | 0,140 | 0,65 | 1,85 | 0,30 | |
| | max. | 0,160 | 0,75 | 2,00 | 0,40 | 0,005 |
| **K5** | min. | 0,110 | 0,05 | 1,40 | 0,20 | |
| | max. | 0,125 | 0,10 | 1,50 | 0,30 | 0,005 |
| **K6** | min. | 0,220 | 0,20 | 1,20 | 0,10 | |
| | max. | 0,250 | 0,30 | 1,35 | 0,20 | 0,007 |
| **K7** | min. | 0,125 | 0,33 | 1,70 | 0,26 | |
| | max. | 0,143 | 0,40 | 1,84 | 0,36 | 0,006 |

**Tabelle 2b**

| | | **C + Si** + **Mn + Cr + N** | **Rₘ** | **R_{p0,2}** | **A₈₀** |
|---|---|---|---|---|---|
| **K1** | min. | 1,86 | 780 MPa | | |
| | max. | 2,18 | | | |
| **K2** | min. | 2,72 | 800 MPa | | |
| | max. | 3,09 | | | |
| **K3** | min. | 3,47 | 1000 MPa | 750 MPa | >10,0% |
| | max. | 3,79 | | | |
| **K4** | min. | 2,94 | 1000 MPa | 810 MPa | >8,0% |
| | max. | 3,32 | | | |
| **K5** | min. | 1,76 | 1200 MPa | 1050 MPa | >3,5% |
| | max. | 2,03 | | | |
| **K6** | min. | 1,72 | 1500 MPa | 1000 MPa | >5,5% |
| | max. | 2,11 | | | |
| **K7** | min. | 2,41 | 1047 MPa | 903 MPa | >6,8% |
| | max. | 2,75 | | | |

**Tabelle 3**

| | **Aufbau** | | | **C + Si + Mn + Cr + N** | **Rₘ** | **R_{p0,2}** | **A₈₀** |
|---|---|---|---|---|---|---|---|
| **V1** | A3 | 4% | min. | 1,70 | 1137 MPa | 993 MPa | 3,5% |
| | K5 | 92% | max. | 1,97 | | | |
| | A3 | 4% | | | | | |
| **V2** | A3 | 7% | min. | 1,65 | 1089 MPa | 951 MPa | 3,5% |
| | K5 | 86% | max. | 1,93 | | | |
| | A3 | 7% | | | | | |
| **V3** | A3 | 4% | min. | 2,78 | 953 MPa | 772 MPa | 8,0% |
| | K4 | 92% | max. | 3,16 | | | |
| | A3 | 4% | | | | | |
| **V4** | A3 | 7% | min. | 2,67 | 917 MPa | 744 MPa | 8,0% |
| | K4 | 86% | max. | 3,16 | | | |
| | A3 | 7% | | | | | |

**Tabelle 4**

| | **Aufbau** | | | **C + Si + Mn + Cr + N** | **Rₘ** | **R_{p0,2}** | **A₈₀** |
|---|---|---|---|---|---|---|---|
| **V5** | A1 | 7% | min. | 3,01 | 912 MPa | 684 MPa | 10,0% |
| | K3 | 86% | max. | 3,32 | | | |
| | A1 | 7% | | | | | |
| **V6** | A2 | 7% | min. | 3,00 | 912 MPa | 684 MPa | 10,0% |
| | K3 | 86% | max. | 3,29 | | | |
| | A2 | 7% | | | | | |
| **V7** | A3 | 7% | min. | 3,12 | 917 MPa | 693 MPa | 10,0% |
| | K3 | 86% | max. | 3,44 | | | |
| | A3 | 7% | | | | | |
| **V8** | A1 | 7% | min. | 1,50 | 1342 MPa | 899 MPa | 5,5% |
| | K6 | 86% | max. | 1,88 | | | |
| | A1 | 7% | | | | | |
| **V9** | A2 | 7% | min. | 1,49 | 1342 MPa | 899 MPa | 5,5% |
| | K6 | 86% | max. | 1,85 | | | |
| | A2 | 7% | | | | | |
| **V10** | A3 | 7% | min. | 1,62 | 1347 MPa | 908 MPa | 5,5% |
| | K6 | 86% | max. | 2,00 | | | |
| | A3 | 7% | | | | | |

**Tabelle 5**

| | **Aufbau** | | | **C + Si + Mn + Cr + N** | **Rₘ** |
|---|---|---|---|---|---|
| **V11** | A4 | 7% | min. | 3,04 | 914 MPa |
| | K2 | 86% | max. | 3,35 | |
| | A4 | 7% | | | |
| **V12** | A4 | 7% | min. | 2,59 | 914 MPa |
| | K4 | 86% | max. | 2,95 | |
| | A4 | 7% | | | |
| **V13** | A4 | 7% | min. | 1,57 | 1086 MPa |
| | K5 | 86% | max. | 1,84 | |
| | A4 | 7% | | | |
| **V14** | A4 | 7% | min. | 1,54 | 1344 MPa |
| | K6 | 86% | max. | 1,91 | |
| | A4 | 7% | | | |
| **V15** | A4 | 7% | min. | 2,13 | 954 MPa |
| | K7 | 86% | max. | 2,46 | |
| | A4 | 7% | | | |

## Patentansprüche

1. Verwendung eines Stahlwerkstücks
- mit einem Randbereich (2) und
- mit einem Kernbereich (3)
wobei das Stahlwerkstück (1) in dem Randbereich (2) weicher ausgebildet ist als in dem Kernbereich (3), und
wobei die Summe der Legierungsbestandteile C, Si, Mn, Cr und N des Stahlwerkstücks (1) insgesamt größer als 1,45 Gew.-% ist, wobei das Stahlwerkstück (1) neben Fe insgesamt aus folgenden Legierungsbestandteilen in Gew.-% besteht:
| | | | |
|---|---|---|---|
| 0,05 | ≤ | C | ≤0,5; |
| 0,060 | ≤ | Si | ≤1,5; |
| 0,5 | ≤ | Mn | ≤3,0; |
| | | P | ≤0,03; |
| | | S | ≤0,03; |
| | | Al | ≤2,0; |
| | | Cr | ≤1,5; |
| | | Cu | ≤0,5; |
| | | Mo | ≤0,5; |
| | | N | ≤0,01; |
| | | Ni | ≤0,5; |
| | | Nb | ≤0,2; |
| | | Ti | ≤0,5; |
| | | V | ≤0,1; |
| | | B | ≤0,1; |
| | | As | ≤0,01; |
| | | Sn | ≤0,05; |
| Co | | | ≤0,02; |
| Ca | | | ≤0,01, |
zur Herstellung eines Fahrwerksteils oder eines Teils hiervon, wobei der Randbereich (2) des Stahlwerkstücks (1) aus zwei beidseitig des Kernbereichs (3) vorgesehenen Randschichten (2) gebildet ist, wobei die beidseitig des Kernbereichs (3) vorgesehenen Randschichten (2) jeweils eine Dicke zwischen 3% und 5% oder zwischen 6% und 8% der Gesamtdicke des Stahlwerkstücks (1) aufweisen.

2. Verwendung nach Anspruch 1,
wobei die Summe der Legierungsbestandteile C, Si, Mn, Cr und N des Stahlwerkstücks (1) insgesamt geringer als 4,5 Gew.-% ist.

3. Verwendung nach Anspruch 1 oder 2,
wobei die Summe der Legierungsbestandteile C, Si, Mn, Cr und N im Randbereich (2) größer als 0,01 Gew.-% und geringer als 1,35 Gew.-% ist.

4. Verwendung nach einem der Ansprüche 1 bis 3,
wobei die Summe der Legierungsbestandteile C, Si, Mn, Cr und N im Kernbereich (3) größer als 1,7 Gew.-% und geringer als 4,8 Gew.-% ist.

5. Verwendung nach Anspruch 1,
wobei die beidseitig des Kernbereichs (3) vorgesehenen Randschichten (2) hinsichtlich ihrer Dicke und/oder ihrer Zusammensetzung im Wesentlichen gleich aufgebaut sind.

6. Verwendung nach einem der Ansprüche 1 bis 5,
wobei die Zugfestigkeit Rₘ des Stahlwerkstücks (1) insgesamt größer als 700 MPa, bevorzugt größer als 800 MPa, weiter bevorzugt größer als 900 MPa, besonders bevorzugt größer als 1000 MPa ist.

7. Verwendung nach einem der Ansprüche 1 bis 6,
wobei die Dehngrenze R_{p0,2} des Stahlwerkstücks (1) insgesamt größer als 650 MPa, bevorzugt größer als 700 MPa, besonders bevorzugt größer als 800 MPa ist.

8. Verwendung nach einem der Ansprüche 1 bis 7,
wobei die Bruchdehnung A₈₀ im Randbereich (2) mindestens 15%, bevorzugt mindestens 30% beträgt.

9. Verwendung nach einem der Ansprüche 1 bis 8,
wobei das Stahlwerkstück (1) eine Verbundstruktur (1) ist und der Kernbereich (3) und der Randbereich (2) durch Verbundschichten der Verbundstruktur (1) gebildet werden, wobei die Verbundstruktur (1) durch Walzplattieren hergestellt ist.

10. Verwendung nach Anspruch einem der Ansprüche 1 bis 8,
wobei der Kernbereich (3) und der Randbereich (2) Bereiche eines monolithischen Werkstücks sind, wobei der Randbereich (2) durch einen Glühvorgang ausgebildet wird.

## Claims

1. Use of a steel workpiece
- having an edge region (2) and
- having a core region (3)
wherein the steel workpiece (1) is softer in the edge region (2) than in the core region (3), and
wherein the sum total of the alloy constituents C, Si, Mn, Cr and N of the steel workpiece (1) overall is greater than 1.45% by weight, wherein the steel workpiece (1), as well as Fe, consists overall of the following alloy constituents in % by weight:
| | | |
|---|---|---|
| 0.05 ≤ C | ≤ 0.5; | |
| 0.060 ≤ | Si | ≤ 1.5; |
| 0.5 ≤ | Mn | ≤ 3.0; |
| | P | ≤ 0.03; |
| | S | ≤ 0.03; |
| | Al | ≤ 2.0; |
| | Cr | ≤ 1.5; |
| | Cu | ≤ 0.5; |
| | Mo | ≤ 0.5; |
| | N | ≤ 0.01; |
| | Ni | ≤ 0.5; |
| | Nb | ≤ 0.2; |
| | Ti | ≤ 0.5; |
| | V | ≤ 0.1; |
| | B | ≤ 0.1; |
| | As | ≤ 0.01; |
| | Sn | ≤ 0.05; |
| | Co | ≤ 0.02; |
| | Ca | ≤ 0.01, |
for production of a chassis part or a part thereof, wherein the edge region (2) of the steel workpiece (1) is formed from two edge layers (2) provided on either side of the core region (3), wherein the edge layers (2) provided on either side of the core region (3) each have a thickness between 3% and 5% or between 6% and 8% of the total thickness of the steel workpiece (1).

2. Use according to Claim 1, wherein the sum total of the alloy constituents C, Si, Mn, Cr and N of the steel workpiece (1) overall is less than 4.5% by weight.

3. Use according to Claim 1 or 2, wherein the sum total of the alloy constituents C, Si, Mn, Cr and N in the edge region (2) is greater than 0.01% by weight and/or less than 1.35% by weight.

4. Use according to any of Claims 1 to 3, wherein the sum total of the alloy constituents C, Si, Mn, Cr and N in the core region (3) is greater than 1.7% by weight and/or less than 4.8% by weight.

5. Use according to Claim 1, wherein the edge layers (2) provided on either side of the core region (3) are essentially of the same construction in terms of their thickness and/or their composition.

6. Use according to any of Claims 1 to 5, wherein the tensile strength Rₘ of the steel workpiece (1) overall is greater than 700 MPa, preferably greater than 800 MPa, further preferably greater than 900 MPa, especially preferably greater than 1000 MPa.

7. Use according to any of Claims 1 to 6, wherein the yield point Rp_{0.2} of the steel workpiece (1) overall is greater than 650 MPa, preferably greater than 700 MPa, especially preferably greater than 800 MPa.

8. Use according to any of Claims 1 to 7, wherein the elongation at break A₈₀ in the edge region (2) is at least 15%, preferably at least 30%.

9. Use according to any of Claims 1 to 8, wherein the steel workpiece (1) is a composite structure (1) and the core region (3) and the edge region (2) are formed by composite layers of the composite structure (1), wherein the composite structure (1) has been produced by roll cladding.

10. Use according to any of Claims 1 to 8, wherein the core region (3) and the edge region (2) are regions of a monolithic workpiece, wherein the edge region (2) is formed by an annealing operation.

## Revendications

1. Utilisation d'une pièce en acier
- avec un domaine en bordure (2) et
- avec un domaine de cœur (3)
la pièce en acier (1) étant conçue plus tendre dans son domaine en bordure (2) que dans son domaine de cœur (3), et
la somme des composants d'alliage C, Si, Mn, Cr et N de la pièce en acier (1) étant au total supérieure à 1,45 % en poids, la pièce en acier (1), en plus de Fe, étant constituée au total des composants d'alliage suivants en pourcentages en poids :
| | | | | |
|---|---|---|---|---|
| 0,05 | | ≤ | C | ≤ 0,5 ; |
| 0,060 | ≤ | Si | ≤ 1,5 ; | |
| 0,5 | | ≤ | Mn | ≤ 3,0 ; |
| | | | P | ≤ 0,03 ; |
| | | | S | ≤ 0,03 ; |
| | | | Al | ≤ 2,0 ; |
| | | | Cr | ≤ 1,5 ; |
| | | | Cu | ≤ 0,5 ; |
| | | | Mo | ≤ 0,5 ; |
| | | | N | ≤ 0,01 ; |
| | | | Ni | ≤ 0,5 ; |
| | | | Nb | ≤ 0,2 ; |
| | | | Ti | ≤ 0,5 ; |
| | | | V | ≤ 0,1 ; |
| | | | B | ≤ 0,1 ; |
| | | | As | ≤ 0,01 ; |
| | | | Sn | ≤ 0,05 ; |
| | | | Co | ≤ 0,02 ; |
| | | | Ca | ≤ 0,01, |
pour fabriquer un châssis de véhicule ou une partie de celui-ci, le domaine en bordure (2) de la pièce en acier (1) étant constitué de deux couches de bordure (2) prévues des deux côtés du domaine de cœur (3), les couches de bordure (2) prévues des deux côtés du domaine de cœur (3) présentant respectivement une épaisseur entre 3 % et 5 % ou entre 6 % et 8 % de l'épaisseur totale de la pièce en acier (1).

2. Utilisation selon la revendication 1, dans laquelle la somme des composants d'alliage C, Si, Mn, Cr et N de la pièce en acier (1) est au total inférieure à 4,5 % en poids.

3. Utilisation selon la revendication 1 ou 2, dans laquelle la somme des composants d'alliage C, Si, Mn, Cr et N dans le domaine en bordure (2) est supérieure à 0,01 % en poids et inférieure à 1,35 % en poids.

4. Utilisation selon l'une des revendications 1 à 3, dans laquelle la somme des composants d'alliage C, Si, Mn, Cr et N dans le domaine de cœur (3) est supérieure à 1,7 % en poids et inférieure à 4,8 % en poids.

5. Utilisation selon la revendication 1, dans laquelle les couches de bordure (2) prévues des deux côtés du domaine de cœur (3) sont conçues de manière essentiellement identique en termes d'épaisseur et/ou de composition.

6. Utilisation selon l'une des revendications 1 à 5, dans laquelle la résistance à la traction Rₘ de la pièce en acier (1) est au total supérieure à 700 MPa, de préférence supérieure à 800 MPa, encore plus préférentiellement supérieure à 900 MPa, particulièrement préférentiellement supérieure à 1000 MPa.

7. Utilisation selon l'une des revendications 1 à 6, dans laquelle la limite élastique R_{p0,2} de la pièce en acier (1) est au total supérieure à 650 MPa, de préférence supérieure à 700 MPa, particulièrement préférentiellement supérieure à 800 MPa.

8. Utilisation selon l'une des revendications 1 à 7, dans laquelle l'allongement à la rupture A₈₀ dans le domaine en bordure (2) est d'au moins 15 %, de préférence d'au moins 30 %.

9. Utilisation selon l'une des revendications 1 à 8, dans laquelle la pièce en acier (1) est une structure composite (1) et le domaine de cœur (3) et le domaine en bordure (2) sont constitués de couches composites de la structure composite (1), la structure composite (1) étant fabriquée par colaminage.

10. Utilisation selon l'une des revendications 1 à 8, dans laquelle le domaine de cœur (3) et le domaine en bordure (2) sont des régions d'une pièce monolithique, le domaine en bordure (2) étant fabriqué par recuit.
